# EUROPEAN PATENT APPLICATION

(11) **EP 4 583 259 A1**
(43) Date of publication of application: **09.07.2025**
(21) Application number: 22959103.7
(22) Date of filing: 21.09.2022
(51) Int. Cl.: H01M 50/103, H01M 10/058

(54) **BATTERY CELL, BATTERY AND ELECTRIC APPARATUS**

(71) Applicant: Contemporary Amperex Technology Co., Limited, Ningde, Fujian 352100 (CN)
(72) Inventor: PU, Yujie, Ningde, Fujian 352100 (CN); LI, Yao, Ningde, Fujian 352100 (CN); CHEN, Xiaobo, Ningde, Fujian 352100 (CN); KE, Jianhuang, Ningde, Fujian 352100 (CN); YANG, Piaopiao, Ningde, Fujian 352100 (CN)
(74) Representative: Kraus & Lederer PartGmbB
(86) International application number: PCT/CN2022/120349
(87) International publication number: WO 2024/060093

(57) **Abstract**

Embodiments of the present application provide a battery cell, a battery, and an electrical apparatus. For the battery cell of the present application, the volumetric energy density of the battery cell is E, the minimum thickness of the battery cell is T, and T and E meet: E≥600 Wh/L, and 6 Wh/(L·mm)≤E/T≤100 Wh/(L·mm). For the battery cell provided in the present application, the high-energy-density battery cell has a high gas production rate and heat release power when thermal runaway occurs, and therefore, the minimum thickness of the battery cell is adjusted to meet requirements of the high-energy battery cell, thereby ensuring the safety of the battery cell.

## Description

### TECHNICAL FIELD

The present application relates to the field of battery production technologies, and particularly, to a battery cell, a battery, and an electrical apparatus.

### BACKGROUND

Battery cells are widely applied to electronic devices, such as applied in a mobile phone, a laptop, a battery car, an electric vehicle, an electric airplane, an electric boat, an electric toy car, an electric toy boat, an electric toy plane, an electric tool, an energy storage system, and the like. Battery cells may include nickel-cadmium battery cells, nickel-hydrogen battery cells, lithium-ion battery cells, sodium-ion battery cells, secondary alkaline zinc-manganese battery cells, and the like.

Therefore, how to improve the safety of the battery cells is an urgent problem to be solved in the development of the battery technologies.

### SUMMARY OF THE INVENTION

In view of the above issues, the present application provides a battery cell, a battery, and an electrical apparatus, which is capable of effectively improving the safety of the battery cell to some extent.

In order to achieve the above objectives, the first aspect of the present application provides a battery cell, the volumetric energy density of the battery cell is E, the minimum thickness of the battery cell is T, T and E meet: E≥600 Wh/L, and 6 Wh/(L·mm)≤E/T≤100 Wh/(L·mm).

For the battery cell provided in the present application, the volumetric energy density of the battery cell being E and the minimum thickness of the battery cell being T meet: E≥600 Wh/L, and 6 Wh/(L·mm)≤E/T≤100 Wh/(L·mm). A high energy-density battery cell has a high gas production rate and heat release power when thermal runaway occurs, and therefore, the minimum thickness of the battery cell is adjusted to meet the requirement of high-energy battery cell, thereby ensuring the safety of the battery cell. Moreover, by appropriately adjusting the relationship between the volumetric energy density and the minimum thickness of the battery cell, when thermal runaway occurs inside the battery cell and gas is generated to form a gas pressure, the battery cell is capable of normally releasing the pressure at a pressure relief mechanism of the battery cell, thereby reducing the structural deformation of the battery cell and the risk of cracking of the battery cell in regions other than the pressure relief mechanism (such as a connection between a shell and an end cover) due to the deformation of the battery cell, thereby further reducing the risk of explosion of the battery cell. In addition, appropriately adjusting the minimum thickness of the battery cell is capable of improving the space utilization of the battery cell and is conducive to further improving the energy density.

According to some embodiments of the present application, the volumetric energy density E of the battery cell is 600 Wh/L<E≤1000 Wh/L.

In these optional embodiments, the appropriate volumetric energy density of the battery cell enables the relationship between the volumetric energy density of the battery cell and the minimum thickness of the battery cell to be within a safety design range of the battery cell, which is more conducive to improving the safety of the battery cell and reducing the overall structural deformation of the battery cell.

According to some embodiments of the present application, T and E meet: 8 Wh/(L·mm)≤E/T≤80 Wh/(L·mm), optionally, 20 Wh/(L·mm)≤E/T≤80 Wh/(L·mm), and more optionally, 25 Wh/(L·mm)≤E/T≤40 Wh/(L·mm).

In these optional embodiments, the appropriate relationship between the volumetric energy density of the battery cell and the minimum thickness of the battery cell not only ensures that the pressure relief mechanism is capable of normally relieving the pressure after thermal runaway occurs in the battery cell, thereby ensuring the safety of the battery cell, but also capable of reducing the deformation of the battery cell after the thermal runaway, thereby basically ensuring the structural integrity of the battery cell.

According to some embodiments of the present application, the minimum thickness T of the battery cell is 10 mm≤T≤100 mm, and optionally, 20 mm≤T≤60 mm.

In these optional embodiments, the appropriate thickness of the battery cell is capable of ensuring the overall strength and high volumetric energy density of the battery cell.

According to some embodiments of the present application, the battery cell includes a shell and an end cover, the shell has an opening along an end thereof, and the end cover is configured to cover the opening.

In these optional embodiments, by adjusting the appropriate relationship between the volumetric energy density of the battery cell and the minimum thickness of the battery cell, the connection strength and connection stability between the shell and the end cover are improved, the risk of cracking at the connection between the shell and the end cover is reduced, and the safety of the battery cell is ensured.

According to some embodiments of the present application, the shell is welded to the end cover.

In these optional embodiments, the shell is welded to the end cover. The welding method can fix positions of the shell and the end cover, and can also increase a connection area between the shell and the end cover, increase the contact stability, and improve the connection strength. Moreover, the welding process is convenient and controllable, which is conducive to large-scale preparation.

According to some embodiments of the present application, the melting point of the shell is c, the wall thickness of the shell is d, and c and d meet: c/d≥400°C/mm, and optionally, 400°C/mm≤c/d≤7500°C/mm.

In these optional embodiments, the battery cell has a high energy density and releases more heat during thermal runaway, and therefore, the melting point c of the shell and the wall thickness d of the shell meet: c/d≥400°C/mm. The relationship between the melting point c of the shell and the wall thickness d of the shell is adjusted to ensure that the shell has a certain mechanical strength. The deformation of the shell is effectively reduced, and the risk of cracking of the battery cell in regions other than the pressure relief mechanism (such as the connection between the shell and the end cover) caused by the deformation of the battery cell is reduced.

According to some embodiments of the present application, the minimum wall thickness of the shell is d, and a ratio of T to d meets: 6T/d≤50, and optionally, 10≤T/d≤100.

In these optional embodiments, by setting an appropriate ratio of the minimum thickness T of the battery cell to the minimum wall thickness d of the shell, the space and weight occupied by the shell can be reduced and the volumetric energy density of the battery cell can be increased while taking into account the safety design requirements of the thermal battery.

According to some embodiments of the present application, the minimum wall thickness d of the shell is 0.2 mm≤d≤1.5 mm.

In these optional embodiments, by setting the minimum wall thickness d of the shell to 0.2 mm≤d≤ 1.5 mm, the minimum wall thickness of the shell is reduced while meeting the safety design requirements, thereby improving the volumetric energy density of the battery cell.

According to some embodiments of the present application, the minimum thickness T of the battery cell is 10 mm≤T≤40 mm, and the minimum wall thickness d of the shell is 0.2 mm≤T≤0.6 mm.

In these optional embodiments, such an arrangement improves the volumetric energy density of the battery cell while meeting the safety design of the battery cell, and is conducive to realizing miniaturization of the battery cell.

According to some embodiments of the present application, the minimum thickness T of the battery cell is 40 mm≤T≤60 mm, and the minimum wall thickness d of the shell is 0.6 mm≤T≤1 mm.

In these optional embodiments, such an arrangement improves the volumetric energy density of the battery cell while meeting the safety design of the battery cell, and is conducive to realizing miniaturization of the battery cell.

According to some embodiments of the present application, the minimum thickness T of the battery cell is 60 mm≤T≤100 mm, and the minimum wall thickness d of the shell is 1 mm≤T≤1.5 mm.

In these optional embodiments, the appropriate relationship between the minimum thickness T of the battery cell and the minimum wall thickness d of the shell is capable of increasing the volumetric energy density of the battery cell, and a large minimum wall thickness of the shell is capable of dispersing the heat transferred to the shell to reduce the risk of the shell being punctured.

According to some embodiments of the present application, the minimum thickness D of the end cover is 1.5 mm≤d≤4.0 mm.

In these optional embodiments, such an arrangement is capable of ensuring the strength of the end cover, and is also capable of increasing the welding strength between the end cover and the shell, and reducing the risk of cracking or breaking at the weld.

According to some embodiments of the present application, the dimension of the battery cell in a first direction is W, W and T meet: 1 mm/mm≤W/T≤60 mm/mm, optionally, 1.25 mm/mm≤W/T≤30 mm/mm, more optionally, 1.5 mm/mm≤W/T≤20 mm/mm, and the dimension of the battery cell in the first direction is the largest.

In these optional embodiments, such an arrangement is capable of reasonably designing the dimension of the shell. On the premise of meeting the battery safety, the dimension in the first direction can be appropriately increased, so that a large surface of the shell has a large heat transfer area. When the thermal runaway occurs, the heat transferred to the shell is capable of being dispersed, thereby reducing heat accumulation, and reducing the risk of the shell being punctured.

According to some embodiments of the present application, the dimension W of the battery cell in the first direction is 100 mm≤W≤600 mm.

In these optional embodiments, the suitable dimension of the battery cell in the first direction is capable of improving the space utilization within the battery cell, thereby increasing the volumetric energy density of the battery cell.

According to some embodiments of the present application, the dimension H of the battery cell in a second direction is H≤150 mm, and the second direction is perpendicular to the first direction.

In these optional embodiments, the dimension H of the battery cell in the second direction is H≤150 mm, so that the electrode assembly in the battery cell is capable of being fully infiltrated by the electrolyte solution, thereby reducing the defect that the middle part of the electrode assembly is not easily infiltrated.

According to some embodiments of the present application, the battery cell is a square battery cell.

In these optional embodiments, the safety effect of such square battery cell is better.

A second aspect of the present application further provides a battery including the battery cell according to the first aspect of the present application.

A third aspect of the present application further provides an electrical apparatus including the battery cell according to the first aspect of the present application or the battery according to the second aspect of the present application, where the battery cell or the battery is configured to provide electric energy.

The above illustrations are merely brief descriptions for the technical solutions of the present application. Specific implementation manners of the present application are described specifically in the following to understand the technical solutions of the present application more clearly and implement the present application according to content of the specification, and to make the above and other objectives, features and advantages of the present application more comprehensible.

### BRIEF DESCRIPTION OF DRAWINGS

In order to explain technical solutions of embodiments of the present application more clearly, a brief introduction of drawings to be used for describing the embodiments of the present application will be made below. Apparently, the drawings described below are merely some embodiments of the present application, and other drawings can be obtained according to these drawings by those skilled in the art without creative labor.
Fig. 1 is a schematic structural diagram of a vehicle according to some embodiments of the present application;
Fig. 2 is a schematic exploded structural diagram of a battery according to some embodiments of the present application;
Fig. 3 is a schematic exploded structural diagram of a battery cell according to some embodiments of the present application;
Fig. 4 is a schematic structural diagram of a battery cell according to some embodiments of the present application;
Fig. 5 is a schematic structural diagram of a shell of a battery cell according to some embodiments of the present application; and
Fig. 6 is a schematic structural diagram of an end cover of a battery cell according to some embodiments of the present application.

Description of reference numerals:
1000. Vehicle;
100. Battery; 200. Controller; 300. Motor;
10. Battery cell; 20. Upper cover; 30. Lower cover;
101. Shell, 102. End cover; 103. Electrode assembly; 104. Electrode terminal; 105. Pressure relief mechanism;
x. Thickness direction; y. First direction; z. Second direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. Based on the embodiments of the present application, all other embodiments derived by a person of ordinary skill in the art without any creative effort shall all fall within the protection scope of the present application.

A "range" disclosed in the present application is defined in the form of a lower limit and an upper limit, a given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥2, it is equivalent to disclosing that the parameter is, for example, an integer such as 2, 3, 4, 5, 6, 7, 8, 9, 10, 11, and 12.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "include" and "having" and any variations thereof in the specification and the claims of the present application as well as the foregoing description of the drawings are intended to cover non-exclusive inclusions. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. Those of ordinary skill in the art can understand the specific meanings of the above terms in the present application according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

In the present application, "a plurality of" appeared refers to two or more (including two).

In the present application, the battery cell may include a lithium-ion secondary battery cell, a lithium-ion battery cell, a lithium-sulfur battery cell, a sodium-lithium-ion battery cell, a sodium-ion battery cell, a magnesium-ion battery cell, or the like, which is not limited in embodiments of the present application. The battery cell may be in a cylindrical shape, a flat shape, a cuboid shape, or another shape, which is also not limited in the embodiments of the present application. Battery cells are generally divided into three types according to encapsulating manners: cylindrical battery cells, square battery cells, and pouch cells, which are also not limited in the embodiments of the present application.

The battery mentioned in the embodiments of the present application refers to a single physical module including one or a plurality of battery cells to provide a higher voltage and capacity. For example, the battery mentioned in the present application may include a battery module, a battery pack, or the like. The battery generally includes a box body for packaging one or a plurality of battery cells. The box body can prevent liquid or other foreign matters from affecting charging or discharging of the battery cell.

The battery cell includes an electrode assembly and an electrolytic solution, and the electrode assembly is composed of a positive electrode plate, a negative electrode plate, and a separator. The operation of the battery cell mainly relies on the movement of metal ions between the positive electrode plate and the negative electrode plate. The positive electrode plate includes a positive electrode current collector and a positive electrode active material layer. A surface of the positive electrode current collector is coated with the positive electrode active material layer. Current collectors not coated with the positive electrode active material layer protrude from the current collector coated with the positive electrode active material layer. The current collectors not coated with the positive electrode active material layer are stacked and serve as a positive tab. Taking a lithium-ion battery as an example, the material of the positive electrode current collector may be aluminum, and the positive electrode active material may be lithium cobalt oxide, n-nary lithium compound (n≥3), lithium manganate, or the like. The negative electrode plate includes a negative electrode current collector and a negative electrode active material layer. A surface of the negative electrode current collector is coated with the negative electrode active material layer. Current collectors not coated with the negative electrode active material layer protrude from the current collector coated with the negative electrode active material layer. The current collectors not coated with the negative electrode active material layer are stacked and serve as a negative tab. The negative electrode current collector may be made of copper, and the negative electrode active material may be one or more of graphite, metallic lithium, silicon, silicon oxide, silicon-carbon alloy, single germanium, germanium oxide, carbon-germanium alloy, single tin, tin oxide, or tin-carbon alloy. The separator may be made of a material such as polypropylene (PP) or polyethylene (PE). In addition, the electrode assembly may have a wound structure or a stacked structure, which is not limited in the embodiments of the present application.

With the rapid development of new energy, increasingly higher requirements have been put forward for the energy density of batteries. When the volumetric energy density of the battery cell≥600 Wh/L, it is difficult for a low-capacity graphite-LFP system to meet design requirements. Therefore, high-capacity electrode materials such as a positive electrode containing high-nickel ternary or lithium cobalt, and a negative electrode containing silicon or metallic lithium have come into being. When these materials are configured to design a high-energy-density battery cell, when thermal runaway occurs, both the gas production rate and the heat release power are several times, or even hundreds of times, that of a low-energy-density battery cell. Therefore, the safety design of high-energy-density battery cell faces some new challenges. The inventors discovered that the minimum thickness of a battery cell is an important parameter in the design of the battery cell. When the thickness dimension of the battery cell is too thin, it is not conducive to improving the volumetric energy density. When the thickness dimension of the battery cell is too thick, the internal air pressure generated by thermal runaway gas production can easily cause excessive deformation of the shell in the thickness direction and cause the battery cell to crack, thereby leading to extreme events such as thermal runaway and explosion of the battery.

In view of the above problems, the inventors have proposed a battery cell after in-depth research, where the volumetric energy density E of the battery cell and the minimum thickness T of the battery cell meet: E≥600 Wh/L, and 6 Wh/(L·mm)≤E/T≤100 Wh/(L·mm). By adjusting the minimum thickness of the battery cell to meet the requirements of a high-energy battery, the safety of the battery is ensured. The technical solution described in the embodiment of the present application is applicable to a battery cell, a battery, and an electrical apparatus.

The battery cell may be applied to a vehicle, a mobile phone, a portable device, a laptop, a ship, a spacecraft, an electric toy, an electric tool, an energy storage system, and the like. The vehicle may be a fuel vehicle, a gas vehicle, or a new-energy vehicle. The new-energy vehicle may be an all-electric vehicle, a hybrid electric vehicle, an extended-range vehicle, or the like. The spacecraft includes an airplane, a rocket, a space shuttle, a spaceship, and the like. The electric toy includes fixed or mobile electric toys, such as a game machine, an electric vehicle toy, an electric ship toy, an electric airplane toy, and the like. The electric tool includes an electric metal cutting tool, an electric grinding tool, an electric assembling tool, an electric tool for railways, for example, an electric drill, an electric grinding machine, an electric wrench, an electric screwdriver, an electric hammer, an electric impact drill, a concrete vibrator, and an electric planer. These embodiments of the present application do not make special restrictions on the above electrical apparatuses.

For the convenience of description in the following embodiments, an electrical apparatus being a vehicle 1000 according to an embodiment of the present application is taken as an example for the description.

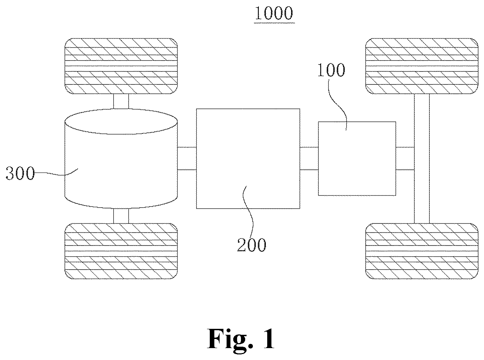

Referring to Fig. 1, Fig. 1 is a schematic structural diagram of a vehicle 1000 according to some embodiments of the present application. The vehicle 1000 may be a fuel vehicle, a gas vehicle or a new energy vehicle. The new energy vehicle may be an all-electric vehicle, a hybrid vehicle, an extended-range vehicle, or the like. A battery 100 is arranged in the vehicle 1000. The battery 100 may be arranged at the bottom or head or tail of the vehicle 1000. The battery 100 may be used as a power supply for the vehicle 1000, for example, the battery 100 may be used as an operating power source for the vehicle 1000. The vehicle 1000 may further include a controller 200 and a motor 300. The controller 200 is configured to control the battery 100 to supply power to the motor 300, for example, to supply power for starting, navigation and driving of the vehicle 1000.

In some embodiments of the present application, the battery 100 not only may serve as an operating power source of the vehicle 1000, but also may serve as a driving power source of the vehicle 1000, thus replacing or partially replacing fuel or natural gas to provide driving power for the vehicle 1000.

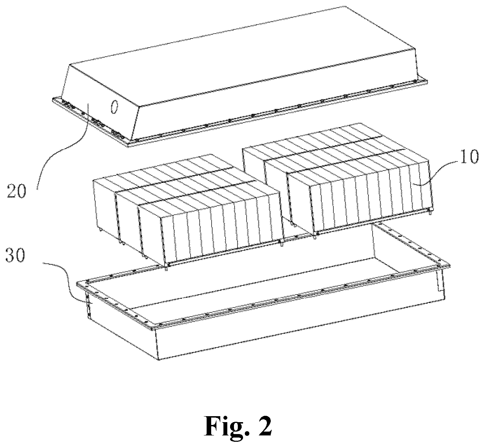

Referring to Fig. 2, Fig. 2 is a exploded view of a battery 100 according to some embodiments of the present application. The battery 100 includes a box body and a battery cell 10. In some embodiments, the box body may include an upper cover 20 and a lower cover 30. The upper cover 20 and the lower cover 30 cover each other, such that the upper cover 20 and the lower cover 30 jointly define an accommodating space for accommodating the battery cell 10. The lower cover 30 may be a hollow structure with one opening end, the upper cover 20 may be a platy structure, and the upper cover 20 covers on an opening side of the lower cover 30, such that the upper cover 20 and the lower cover 30 jointly define the accommodating space. Alternatively, the upper cover 20 and the lower cover 30 may each be a hollow structure with one opening side, and an opening side of the upper cover 20 covers on an opening side of the lower cover 30. Of course, the box body formed by the upper cover 20 and the lower cover 30 may be of various shapes, such as a cylinder and a cuboid.

In the battery 100, there may be a plurality of battery cells 10, and the plurality of battery cells 10 may be connected in series, in parallel, or in parallel-series, and the parallel-series connection means that the plurality of battery cells 10 are connected in both series and parallel. The plurality of battery cells 10 may be directly connected in series, in parallel, or in parallel-series, and then the entirety formed by the plurality of battery cells 10 is accommodated in the box body. Of course, the battery 100 may also be an entirety formed by connecting the plurality of battery cells 10 in series, in parallel, or in parallel-series to form battery modules and then connecting the plurality of battery modules in series, in parallel, or in parallel-series, and is then accommodated in the box body. The battery 100 may further include other structures. For example, the battery 100 may further include a bus component for electrically connecting the plurality of battery cells 10.

Each battery cell 10 may be a lithium-ion battery cell, a lithium-sulfur battery cell, a sodium-ion battery cell, or a magnesium-ion battery cell, but is not limited thereto. The battery cell 10 may be in a cylindrical, flat, or cuboid shape, or in other shapes, or the like.

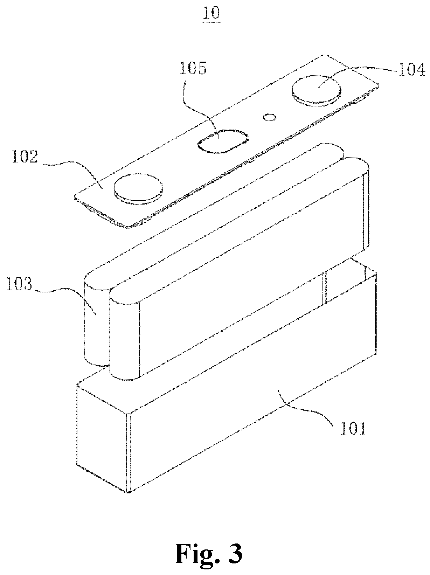

Referring to Fig. 3, Fig. 3 is a schematic exploded structural diagram of a battery cell 10 according to some embodiments of the present application. The battery cell 10 refers to the smallest unit constituting a battery. As shown in Fig. 3, the battery cell 10 includes a shell 101, an end cover 102, an electrode assembly 103, an electrical terminal 104, and other functional components.

The end cover 102 refers to a component that covers an opening of the shell 101 to isolate the internal environment of the battery cell 10 from the external environment. Without limitation, the shape of the end cover 102 may be adapted to the shape of the shell 101 to fit the shell 101. Optionally, the end cover 102 may be made of a material (such as aluminum alloy) with a certain hardness and strength, and in this way, the end cover 102 is not easily deformed when being subjected to extrusion and collisions, such that the battery cell 10 is capable of having a higher structural strength, and the safety performance can also be improved. A functional component such as the electrode terminal 104 may be arranged on the end cover 102. The electrode terminal 104 can be configured to be electrically connected to the electrode assembly 103, for outputting or inputting electric energy from or into the battery cell 10. The end cover 102 may be made of various materials, such as copper, iron, aluminum, stainless steel, aluminum alloy, and plastic, which is not particularly limited in the embodiments of the present application. In some embodiments, an insulating member may be further arranged on an inner side of the end cover 102, and the insulating member may be configured to isolate an electrical connection component in the shell 101 from the end cover 102, thereby reducing the risk of short circuit. For example, the insulating member may be made of plastic, rubber, and the like.

The shell 101 is an assembly configured to fit the end cover 102 to form the internal environment of the battery cell 10, where the formed internal environment can be used for accommodating the electrode assembly 103, an electrolyte solution, and other components. The shell 101 and the end cover 102 may be separate components, the shell 101 may be provided with an opening, and the internal environment of the battery cell 10 is formed by making the end cover 102 cover the opening at the opening. Without limitation, the end cover 102 and the shell 101 may also be integrated. Specifically, the end cover 102 and the shell 101 may form a common connecting surface before other components enter the shell. When the interior of the shell 101 is required to be encapsulated, the shell 101 is covered by the end cover 102. The shell 101 may be of various shapes and dimensions, such as a cuboid, a cylinder, and a hexagonal prism. Specifically, the shape of the shell 101 may be determined according to the specific shape and dimension of the electrode assembly 103. The shell 101 may be made of various materials, such as copper, iron, aluminum, stainless steel, aluminum alloy, and plastic, which is not particularly limited in the embodiments of the present application. A functional component such as an electrode terminal and a liquid injection hole may also be arranged on the shell 101.

In some embodiments, the battery cell 10 may be further provided with a pressure relief mechanism 105. The pressure relief mechanism 105 is configured to relief an internal pressure when the internal pressure or temperature of the battery cell 10 reaches a threshold, and may be arranged on the end cover 102 or the shell 101.

The electrode assembly 103 is a component of the battery cell 10 where an electrochemical reaction occurs. One or more electrode assemblies 103 may be included within the shell 101. The electrode assembly 103 is mainly formed by winding or stacking a positive electrode plate and a negative electrode plate, and a separator is generally arranged between the positive electrode plate and the negative electrode plate. The portions, with active materials, of the positive electrode plate and the negative electrode plate constitute a main body part of the electrode assembly 103, and the portions, without the active materials, of the positive electrode plate and the negative electrode plate respectively constitute tabs. The positive tab and the negative tab may be located at one end of the main body part together or located at two ends of the main body part respectively. In a charging or discharging process of the battery, the positive active material and the negative active material react with the electrolytic solution, and the tabs are connected to the electrode terminal 104 to form a current loop.

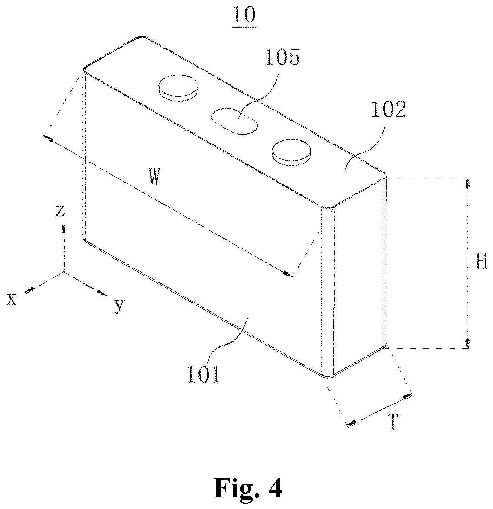

Referring to Fig. 4, Fig. 4 is a schematic structural diagram of a battery cell according to some embodiments of the present application.

As shown in Fig. 3 and Fig. 4, for the battery cell 10 of the present application, the volumetric energy density of the battery cell 10 is E, the minimum thickness of the battery cell 10 is T, and T and E meet: E≥600 Wh/L, and 6 Wh/(L·mm)≤E/T≤100 Wh/(L·mm).

The battery cell 10 is the smallest unit that makes up a battery, which is capable of achieving the charging and discharging functions separately. The battery cell 10 may be a square-shell battery cell, a pouch cell, or another type of battery cell. The battery cell 10 may be in a flat shape, a cuboid shape, or another shape, and in the present application, the battery cell 10 is, for example, a cuboid.

The battery cell 10 has three directions, namely a thickness direction x, a first direction y, and a second direction z. The dimension of the battery cell 10 in the thickness direction x is smaller than the dimension in the second direction z, and the dimension in the second direction z is smaller than the dimension in the first direction y. The dimension of the battery cell 10 in the second direction z refers to the dimension occupied by the shell 101 and the end cover 102 of the battery cell 10 in the second direction z, excluding the dimension of the electrode terminal 104 protruding from the end cover 102 or the shell 101.

In some embodiments, any two of the thickness direction x, the first direction y, and the second direction z are perpendicular to each other.

When the battery cell 10 has a plurality of thickness dimensions in the thickness direction, the thickness with the minimum value is the minimum thickness T of the battery cell 10.

A calculation formula of the volumetric energy density of the battery cell 10 is as follows: Volumetric energy density = available capacity of positive electrode active material (A · h/kg) × mass of positive electrode active material (kg) × nominal voltage of the battery cell 10 (V)/volume of the battery cell 10 (L)

As can be seen, increasing the volumetric energy density of the battery cell 10 mainly includes: starting from a battery chemical system, using high-voltage and/or high-capacity electrode materials such as high-nickel ternary layered materials, high-capacity lithium manganese-rich materials, silicon-based negative electrode materials, and lithium metal negative electrodes; and without changing the battery chemical system, starting from the structural design, increasing the proportion of active substances in the unit mass or unit volume of the battery cell 10. However, with the increase in the volumetric energy density, higher requirements are placed on the safety design of the structure of the battery cell 10. Generally, the increase in the external dimensions of the battery cell 10 has the least impact on the manufacturing process of the battery cell 10, and the increase in the dimension of the battery cell 10 can increase the volumetric energy density. The thickness of the battery cell 10 is a relatively sensitive parameter, especially for batteries with high specific energy chemical systems. When the minimum thickness dimension of the battery cell 10 is too small, it is not conducive to improving the energy density of the battery cell 10. When the minimum thickness dimension of the battery cell 10 is too large, the shell 101 and the end cover 102 of the battery cell 10 are easily deformed by force, thereby reducing the strength of other regions of the battery cell 10 except the pressure relief mechanism 105 (for example, the strength of a connection between the shell 101 and the end cover 102), so that other regions of the battery cell 10 except the pressure relief mechanism 105 crack earlier than the pressure relief mechanism 105, and cannot release pressure normally, thereby leading to extreme events of thermal runaway explosion.

In these optional embodiments, the volumetric energy density of the battery cell 10 is E and the minimum thickness of the battery cell 10 is T, which meet: E≥600 Wh/L, and 6 Wh/(L·mm)≤E/T≤100 Wh/(L·mm), which is capable of ensuring the safety of the battery cell 10 and reducing the risk of explosion.

In an embodiment of the present application, when the volumetric energy density of the battery cell 10 is E≥600 Wh/L, it is required that the volumetric energy density E of the battery cell 10 and the minimum thickness T of the battery cell 10 meet: E≥600 Wh/L, and 6 Wh/(L·mm)≤E/T≤100 Wh/(L·mm), thereby ensuring the safety of the battery cell 10 with a high volumetric energy density.

The inventors of the battery cell 10 provided in the present application have found, after in-depth research and extensive experiments, that the volumetric energy density E of the battery cell 10 and the minimum thickness T of the battery cell 10 meet: E≥600 Wh/L, and 6 Wh/(L · mm)≤E/T≤100 Wh/(L · mm). The high-energy-density battery cell 10 has a high gas production rate and heat release power when thermal runaway occurs, and therefore, the minimum thickness of the battery cell 10 is adjusted to meet the requirements of the high-energy battery cell 10, thereby ensuring the safety of the battery cell 10. Moreover, by appropriately adjusting the relationship between the volumetric energy density and the minimum thickness of the battery cell 10, in the case of thermal runaway and gas production occurring inside the battery cell 10 to form a gas pressure, the battery cell 10 is capable of relieving the pressure normally at the pressure relief mechanism of the battery cell, thereby reducing the structural deformation of the battery cell 10 and reducing the risk of cracking in regions of the battery cell 10 other than the pressure relief mechanism (such as the connection between the shell 101 and the end cover 102) caused by the deformation of the battery cell 10, thereby further reducing the risk of battery explosion. In addition, adjusting the minimum thickness of the battery cell 10 appropriately is capable of improving the space utilization of the battery cell 10, which is conducive tor further improving the energy density.

In some embodiments of the present application, the volumetric energy density of the battery cell 10 is E, where E is 600 Wh/L, 650 Wh/L, 700 Wh/L, 750 Wh/L, 800 Wh/L, 850 Wh/L, 900 Wh/L, 950 Wh/L, 1000 Wh/L, 1050 Wh/L, 1100 Wh/L, 1150 Wh/L, 1200 Wh/L, 1250 Wh/L, 1300 Wh/L, 1350 Wh/L, 1400 Wh/L, 1450 Wh/L, 1500 Wh/L, ..., and the like, or within other ranges formed by any two of the above endpoints.

In some embodiments of the present application, the volumetric energy density of the battery cell 10 is E, the minimum thickness of the battery cell 10 is T, and T and E meet E/T being 6 Wh/(L·mm), 10 Wh/(L·mm), 15 Wh/(L·mm), 20 Wh/(L·mm), 25 Wh/(L·mm), 30 Wh/(L·mm), 35 Wh/(L·mm), 40 Wh/(L·mm), 45 Wh/(L·mm), 50 Wh/(L·mm), 55 Wh/(L·mm), 60 Wh/(L·mm), 65 Wh/(L·mm), 70 Wh/(L·mm), 75 Wh/(L·mm), 80 Wh/(L·mm), 85 Wh/(L·mm), 90 Wh/(L·mm), 95 Wh/(L·mm), 100 Wh/(L·mm), or within other ranges formed by any two of the above endpoints.

In some embodiments of the present application, the battery cell 10 further includes a pressure relief mechanism 105. The pressure relief mechanism 105 on the battery cell 10 has an important impact on the safety performance of the battery cell 10. For example, when short circuit, overcharge, and the like occur, thermal runaway may occur inside the battery cell 10 and the pressure may rise suddenly. In this case, the internal pressure and temperature can be released outward through the actuation of the pressure relief mechanism 105, so as to prevent explosion and fire of the battery cell 10. The pressure relief mechanism 105 may be an element or a component that is activated when the battery cell 10 reaches a certain condition. For example, the pressure relief mechanism 105 may be an element or a component that is actuated to relieve the internal pressure and/or internal substance of the battery cell 10 when the internal pressure or internal temperature reaches a predetermined threshold. The threshold design varies according to different design requirements. The pressure relief mechanism 105 may be in the form of an explosion-proof valve, an air valve, a pressure relief valve, a safety valve, or the like, and may specifically be a pressure-sensitive element or structure.

It is understandable that the pressure relief mechanism 105 may be arranged on the end cover 102 or arranged on any wall of the shell 101.

According to some embodiments of the present application, the volumetric energy density E of the battery cell 10 is 600 Wh/L<E≤1000 Wh/L.

In some embodiments of the present application, the volumetric energy density of the battery cell 10 is E, where E is 610 Wh/L, 620 Wh/L, 630 Wh/L, 640 Wh/L, 650 Wh/L, 660 Wh/L, 670 Wh/L, 680 Wh/L, 690 Wh/L, 700 Wh/L, 710 Wh/L, 720 Wh/L, 730 Wh/L, 740 Wh/L, 750 Wh/L, 760 Wh/L, 770 Wh/L, 780 Wh/L, 790 Wh/L, 800 Wh/L, 810 Wh/L, 820 Wh/L, 830 Wh/L, 840 Wh/L, 850 Wh/L, 880 Wh/L, 870 Wh/L, 880 Wh/L, 890 Wh/L, 900 Wh/L, 910 Wh/L, 920 Wh/L, 930 Wh/L, 940 Wh/L, 950 Wh/L, 990 Wh/L, 970 Wh/L, 980 Wh/L, 990 Wh/L, 1000 Wh/L, or within other ranges formed by any two of the above endpoints.

In these optional embodiments, the inventors have found, through in-depth research and extensive experiments, that a suitable volumetric energy density of the battery cell 10 enables the relationship between the volumetric energy density of the battery cell 10 and the minimum thickness of the battery cell 10 to be within a safe design range of the battery cell 10, which is more conducive to ensuring the safety of the battery cell 10 and reducing the overall structural deformation of the battery cell 10.

According to some embodiments of the present application, T and E meet: 8 Wh/(L·mm)≤E/T≤80 Wh/(L·mm).

Optionally, T and E meet: 20 Wh/(L·mm)≤E/T≤80 Wh/(L·mm). Such an arrangement is capable of ensuring the safety of the battery cell 10, and the pressure relief mechanism 105 is capable of reliving the pressure normally after thermal runaway. However, one of the shell 101 and the end cover 102 of the battery cell 10 is deformed, and the overall structural deformation of the battery cell 10 is not obvious.

More optionally, T and E meet: 25 Wh/(L·mm)≤E/T≤40 Wh/(L·mm). Such an arrangement is capable of ensuring the safety of the battery cell 10, and the pressure relief mechanism 105 is capable of relieving the pressure normally after thermal runaway, thereby ensuring the overall structure of the battery cell 10.

In these optional embodiments, the inventors have found, through in-depth research and extensive experiments, that the volumetric energy density of the battery cell 10 and the minimum thickness of the battery cell 10 has an appropriate relationship, which not only ensures that the pressure relief mechanism 105 is capable of relieving the pressure after thermal runaway of the battery cell 10 to ensure the safety of the battery cell 10, but is also capable of reducing the structural deformation of the battery cell 10 after the thermal runaway, thereby basically ensuring the structural completeness of the battery cell 10.

According to some embodiments of the present application, as shown in Fig. 3 and Fig. 4, the minimum thickness T of the battery cell 10 is 10 mm<T≤100 mm.

In some embodiments of the present application, the minimum thickness T of the battery cell 10 is 10 mm, 15 mm, 20 mm, 25 mm, 30 mm, 35 mm, 40 mm, 45 mm, 50 mm, 55 mm, 60 mm, 65 mm, 70 mm, 75 mm, 80 mm, 85 mm, 90 mm, 95 mm, 100 mm, or within other ranges formed by any two of the above endpoints.

Optionally, the minimum thickness T of the battery cell 10 is 20 mm<T≤60 mm.

In these optional embodiments, the inventors found, after in-depth research and extensive experiments, that an appropriate thickness of the battery cell 10 is capable of ensuring the overall strength and high volumetric energy density of the battery cell 10. When the thickness of the battery cell 10 is relatively thick, the battery cell 10 may produce gas due to thermal runaway to form a gas pressure, so that the end cover 102 and the shell 101 of the battery cell 10 deform more seriously. The deformation of the end cover 102 and the shell 101 pulls the connection between the end cover 102 and the shell 101, which reduces the strength of the connection, thereby causing cracking of the connection and the risk of battery explosion. When the thickness of the battery cell 10 is relatively thin, there is not enough space to install the pressure relief mechanism 105, and the space utilization of the battery cell 10 is low, which is not conducive to improving the energy density.

According to some embodiments of the present application, as shown in Fig. 3 and Fig. 4, the battery cell 10 includes the shell 101 and the end cover 102. An end of the shell 101 has an opening, and the end cover 102 is configured to cover the opening.

The end cover 102 refers to a component that covers the opening of the shell 101 to isolate the internal environment of the battery cell 10 from the external environment. Without limitation, the shape of the end cover 102 may be adapted to the shape of the shell 101 to fit the shell 101. Optionally, the end cover 102 may be made of a material (such as aluminum alloy) with a certain hardness and strength, and in this way, the end cover 102 is not easily deformed when being subjected to extrusion and collisions, such that the battery cell 10 is capable of having a higher structural strength, and the safety performance can also be improved. A functional component such as the electrode terminal may be arranged on the end cover 102. The end cover 102 may be made of various materials, such as copper, iron, aluminum, stainless steel, aluminum alloy, and plastic, which is not particularly limited in the embodiments of the present application.

The shell 101 is an assembly configured to fit the end cover 102 to form the internal environment of the battery cell 10, where the formed internal environment can be used for accommodating the electrode assembly, an electrolyte solution, and other components. The shell 101 and the end cover 102 may be separate components, the shell 101 may be provided with an opening, and the internal environment of the battery cell 10 is formed by making the end cover 102 cover the opening at the opening. Specifically, the shape of the shell 101 may be determined according to the specific shape and dimension of the electrode assembly. The shell 101 may be made of various materials, such as copper, iron, aluminum, stainless steel, aluminum alloy, and plastic, which is not particularly limited in the embodiments of the present application.

In some embodiments of the present application, there are various manners of connecting the end cover 102 and the shell 101, such as welding, upsetting, riveting, and bonding.

For example, the end of the shell 101 in the second direction z has an opening, and the end cover 102 is configured to cover the opening.

For example, the end of the shell 101 in the thickness direction x has an opening, and the end cover 102 is configured to cover the opening.

Optionally, the electrode assembly is composed of a positive electrode plate, a negative electrode plate, and a separator in the form of winding or lamination, where the gram capacity of a cathode material of the positive electrode plate is c₁≥170 mAh/g, such as nickel cobalt manganese, nickel cobalt aluminum, nickel cobalt manganese aluminum, and lithium cobaltate, and the gram capacity of an anode material of the negative electrode plate is c₂≥350 mAh/g, such as graphite, silicon-doped anode, and metallic lithium.

In the embodiments of the present application, the connection between the end cover 102 and the shell 101 is a weak point of the battery cell 10. When the battery cell 10 experiences thermal runaway, thermal runaway occurs inside the battery cell 10 to produce gas and form an air pressure. The shell 101 and the end cover 102 of the battery cell 10 are easily deformed by a force, thereby reducing the strength of the connection between the shell 101 and the end cover 102, causing the connection between the shell 101 and the end cover 102 to crack earlier than the pressure relief mechanism 105, and unable to relief pressure normally, thereby leading to the extreme event of thermal runaway explosion. Moreover, as the thickness of the battery cell 10 increases, the span of the connection becomes larger, and its strength is relatively weakened, making it more prone to the risk of cracking.

In these optional embodiments, by adjusting the appropriate relationship between the volumetric energy density of the battery cell 10 and the minimum thickness of the battery cell 10, the connection strength and stability between the shell 101 and the end cover 102 are capable of being improved, which reduces the risk of cracking at the connection between the shell 101 and the end cover 102, ensures the normal pressure relief of the pressure relief mechanism 105, and guarantees the safety of the battery cell 10.

According to some embodiments of the present application, the shell 101 is welded to the end cover 102.

Optionally, the shell 101 and the end cover 102 are welded by laser welding, penetration welding, ultrasonic welding, or the like.

In these optional embodiments, the shell 101 is welded to the end cover 102, and the welding method can fix the positions of the shell 101 and the end cover 102, and can further increase a connection area between the shell 101 and the end cover 102, increase the stability of the contact, and improve the connection strength. Moreover, the welding process is convenient and controllable, which is conducive to large-scale preparation.

According to some embodiments of the present application, the melting point of the shell 101 is c, the minimum wall thickness of the shell 101 is d, and c and d meet: c/d≥400°C/mm, and optionally 400°C/mm≤c/d≤7500°C/mm.

It should be specifically noted that the wall thickness of the shell 101 here does not include the thickness of various functional regions that may be arranged on the shell 101 (such as the place where the liquid injection hole is arranged, the place where the electrode terminal is installed, the place where the pressure relief mechanism is installed, the step at the shell opening to accommodate the end cover, and the shell corner), that is, d refers to the thickness of the shell 101 excluding the functional regions.

In some embodiments of the present application, when the shell 101 has a plurality of wall thickness dimensions, the wall thickness with the minimum value is the minimum wall thickness d of the shell 101.

Optionally, the melting point of the shell 101 the melting point of the shell 101 is c and the minimum wall thickness of the shell 101 is d, which meet 400°C/mm≤c/d≤7500°C/mm. With such setting, the melting point c of the shell 101 and the minimum wall thickness d of the shell 101 have an appropriate relationship, thereby ensuring the structural strength of the shell 101.

In some embodiments of the present application, the melting point of the shell 101 the melting point c of the shell 101 and the minimum wall thickness d of the shell 101 meet c/d being 400°C/mm, 1000°C/mm, 1500°C/mm, 2000°C/mm, 2500°C/mm, 3000°C/mm, 3500°C/mm, 4000°C/mm, 4500°C/mm, 5000°C/mm, 5500°C/mm, 6000°C/mm, 6500°C/mm, 7000°C/mm, 7500°C/mm, or in other ranges formed by any two of the above endpoints.

In some embodiments of the present application, the shell 101 may be made of some materials with a low melting point, which can be understood as materials that are not resistant to high temperatures, such as polyester materials. Of course, the shell 101 may also be made of some materials with a high melting point, which can be understood as materials that are resistant to high temperatures, such as aluminum, steel, or other metals. When the shell 101 is made of a high temperature resistant material, the value of c/d may be adaptively reduced to reduce the space and weight occupied by the minimum wall thickness of the shell 101 thereby increasing the volumetric energy density of the battery cell 10.

In these optional embodiments, the inventors found, after in-depth research and extensive experiments, that the battery cell 10 has a high energy density and releases a lot of heat during thermal runaway, and therefore, the melting point c of the shell 101 and the minimum wall thickness d of the shell 101 meet: c/d≥400°C/mm. The relationship between the melting point c of the shell 101 and the minimum wall thickness d of the shell 101 is adjusted to ensure that the shell 101 has a certain mechanical strength, thereby reducing the risk of cracking of the battery cell 10 in other regions except the pressure relief mechanism (such as the connection between the shell 101 and the end cover 102) due to deformation of the battery cell 10.

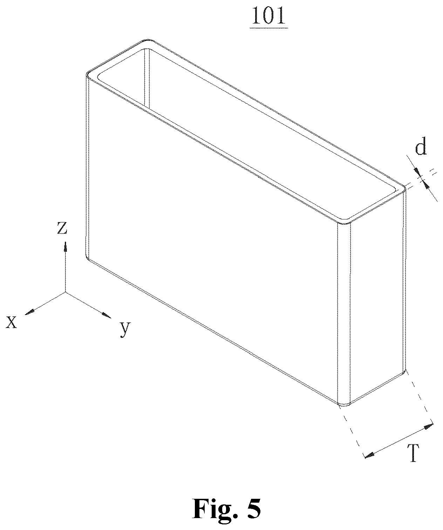

Referring to Fig. 5, Fig. 5 is a schematic diagram of a shell of a battery cell according to some embodiments of the present application.

According to some embodiments of the present application, as shown in Fig. 4 and Fig. FIG. 5, the minimum wall thickness of the shell 101 is d, and a ratio of T to d meets: 6≤T/d≤500.

In some embodiments of the present application, the ratio T/d of the minimum thickness T of the battery cell 10 to the minimum wall thickness d of the shell 101 meets: 6, 50, 100, 150, 200, 250, 300, 350, 400, 450, 500, or in other ranges formed by any two of the above endpoints.

Optionally, the ratio of the minimum thickness T of the battery cell 10 to the minimum wall thickness d of the shell 101 meets 10≤T/d≤100.

In the embodiments of the present application, a larger ratio of the minimum thickness T of the battery cell 10 to the minimum wall thickness d of the shell 101 indicates a thinner minimum wall thickness d of the shell 101, and a higher risk of the shell 101 being penetrated by gas. A smaller ratio of the minimum thickness T of the battery cell 10 to the minimum wall thickness d of the shell 101 indicates a thicker minimum wall thickness d of the shell 101, and a lower risk of the shell 101 being penetrated by gas, but the shell 101 occupies more space and weight in the battery cell 10.

In these optional embodiments, the inventors found, after in-depth research and extensive experiments, that arranging an appropriate ratio of the minimum thickness T of the battery cell 10 to the minimum wall thickness d of the shell 101 can reduce the occupied space and weight of the shell 101 on the premise of considering the safety design requirements of a thermal battery, thereby improving the volumetric energy density of the battery cell 10.

According to some embodiments of the present application, as shown in Fig. 4 and Fig. 5, the minimum wall thickness d of the shell 101 is 0.2 mm≤d≤1.5 mm.

In some embodiments of the present application, the minimum wall thickness d of the shell 101 is 0.2 mm, 0.3 mm, 0.4 mm, 0.5 mm, 0.6 mm, 0.7 mm, 0.8 mm, 0.9 mm, 1 mm, 1.1 mm, 1.2 mm, 1.3 mm, 1.4 mm, 1.5 mm, or within other ranges formed by any two of the above endpoints.

In these optional embodiments, the inventors found, after in-depth research and extensive experiments, that by setting the minimum wall thickness d of the shell 101 to 0.2 mm≤d≤1.5 mm, while meeting the safety design requirement, the volumetric energy density of the battery cell 10 can be improved by reducing the minimum wall thickness d of the shell 101.

According to some embodiments of the present application, the minimum thickness T of the battery cell 10 is 10 mm≤T≤40 mm, and the minimum wall thickness d of the shell 101 is 0.2 mm≤d≤0.6 mm.

In these optional embodiments, the inventors found, after in-depth research and extensive experiments, that with such setting, the volumetric energy density of the battery cell 10 is improved while meeting the safety design of the battery cell 10, thereby being conducive to achieving miniaturization of the battery cell 10.

According to some other embodiments of the present application, the minimum thickness T of the battery cell 10 is 40 mm≤T≤60 mm, and the minimum wall thickness d of the shell 101 is 0.6 mm≤d≤1 mm.

In these optional embodiments, the inventors found, after in-depth research and extensive experiments, that with such setting, the volumetric energy density of the battery cell 10 can be improved while meeting the safety design of the battery cell 10, thereby being conducive to achieving miniaturization of the battery cell 10.

According to still other embodiments of the present application, the minimum thickness T of the battery cell 10 is 60 mm<T≤100 mm, and the minimum wall thickness d of the shell 101 is 1 mm≤d≤1.5 mm.

In these optional embodiments, the inventors found, after in-depth research and extensive experiments, that there is an appropriate ratio between the minimum thickness T of the battery cell 10 and the minimum wall thickness d of the shell 101, which can improve the volumetric energy density of the battery cell 10, and the larger minimum wall thickness d of the shell 101 is capable of dispersing the heat transferred to the shell 101, thereby reducing the risk of the shell 101 being punctured.

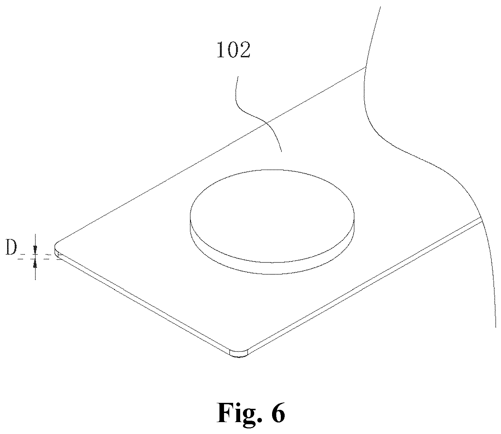

Referring to Fig. 6, Fig. 6 is a schematic structural diagram of an end cover of a battery cell according to some embodiments of the present application.

According to some embodiments of the present application, as shown in Fig. 4 to Fig. 6, the minimum thickness D of the end cover 102 is 1.5 mm≤D≤4.0 mm.

It should be specifically noted that the minimum thickness of the end cover 102 here does not include the thickness of various functional regions that may be arranged on the end cover 102 (such as the place where the liquid injection hole is arranged, the place where the electrode terminal is installed, and the place where the pressure relief mechanism is installed), that is, D refers to the minimum thickness of the end cover 102 excluding the functional regions.

In some embodiments of the present application, when the end cover 102 has a plurality of wall thickness dimensions, the thickness with the minimum value is the minimum thickness D of the end cover 102.

In some embodiments of the present application, the minimum thickness D of the end cover 102 is 1.5 mm, 1.6 mm, 1.7 mm, 1.8 mm, 1.9 mm, 2 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, 4.0 mm, or within other ranges formed by any two of the above endpoints.

In some embodiments of the present application, the minimum thickness D of the end cover 102 is 1.5 mm≤D≤4.0 mm, which is capable of meeting the welding process requirements and capable of ensuring the welding strength after welding. If the thickness is too thin, welding penetration is likely to occur, and the process is difficult. If the thickness is too thick, the welding process is difficult, and more heat is accumulated during the welding, resulting in insufficient welding strength due to the heat.

In these optional embodiments, the inventors found, through in-depth research and extensive experiments, that such setting is capable of ensuring the strength of the end cover 102 and further capable of increasing the welding strength between the end cover 102 and the shell 101, thereby reducing the risk of cracking or fracture at the welding point.

According to some embodiments of the present application, the dimension of the battery cell 10 in the first direction y is W, and W and T meet: 1 mm/mm≤W/T≤60 mm/mm. The dimension of the battery cell 10 in the first direction y is the largest.

In some embodiments of the present application, the battery cell 10 has a thickness (dimension in the thickness direction x), a width (dimension in the first direction y), and a height (dimension in the second direction z), where the width of the battery cell 10 is greater than the height, and the height is greater than the thickness.

In some embodiments of the present application,the dimension W of the battery cell 10 in the first direction y and the minimum thickness T of the battery cell 10 meet W/T being 1 mm/mm, 5 mm/mm, 10 mm/mm, 15 mm/mm, 20 mm/mm, 25 mm/mm, 30 mm/mm, 35 mm/mm, 40 mm/mm, 45 mm/mm, 50 mm/mm, 55 mm/mm, 60 mm/mm, or in other ranges formed by any two of the above endpoints.

Optionally, the dimension W of the battery cell 10 in the first direction y and the minimum thickness T of the battery cell 10 meet 1.25 mm/mm≤W/T≤30 mm/mm.

More optionally, the dimension W of the battery cell 10 in the first direction y and the minimum thickness T of the battery cell 10 meet 1.5 mm/mm≤W/T≤20 mm/mm.

In these optional embodiments, the inventors found, through in-depth research and extensive experiments, that such setting is capable of reasonably designing the dimension of the shell 101, and on the premise of meeting the safety of the battery, the dimension of the first direction y can be appropriately increased, so that the large surface of the shell 101 has a large heat transfer area which, in the case of thermal runaway, is capable of dispersing the heat transferred to the shell 101, thereby reducing the accumulation of heat and lowering the risk of the shell 101 being punctured.

According to some embodiments of the present application, the dimension W of the battery cell 10 in the first direction y is 100 mm≤W≤600 mm/mm.

In some embodiments of the present application, the dimension W of the battery cell 10 in the first direction y is 100 mm, 150 mm, 200 mm, 250 mm, 300 mm, 350 mm, 400 mm, 450 mm, 500 mm, 550 mm, 600 mm, or within other ranges formed by any two of the above endpoints.

In these optional embodiments, the inventors found, after in-depth research and extensive experiments, that an appropriate dimension of the battery cell 10 in the first direction y is capable of improving the spatial utilization in the battery cell 10, thereby improving the volumetric energy density of the battery cell 10.

According to some embodiments of the present application, as shown in Fig. 4 to Fig. 6, the dimension H of the battery cell 10 in the second direction z is H≤150 mm, and the second direction z is perpendicular to the first direction y.

In these optional embodiments, the inventors found, after in-depth research and extensive experiments, that the dimension H of the battery cell 10 in the second direction z is H≤150 mm, so that the electrode assembly in the battery cell 10 can be fully infiltrated by the electrolyte solution, thereby reducing the defect that the middle part of the electrode assembly is not easily infiltrated.

According to some embodiments of the present application, the battery cell 10 is a square battery cell 10.

In these optional embodiments, such a square battery cell 10 has a more preferable safety effect.

A second aspect of the present application further provides a battery including the battery cell 10 according to the first aspect of the present application.

A third aspect of the present application further provides an electrical apparatus including the battery cell 10 according to the first aspect of the present application or the battery according to the second aspect of the present application. The battery cell 10 or the battery is configured to provide electric energy.

### Embodiment:

Embodiments of the present application will be described below. The embodiments described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### Embodiment 1

A square battery cell is designed, which includes a shell, an electrode assembly, an electrolyte solution, and an end cover. The electrode assembly is obtained by sequentially stacking and winding a positive electrode plate, a negative electrode plate, and a separator. The electrode assembly is placed in the shell, the electrolyte solution is added, and the end cover is closed on the shell. After packaging, standing, formation, aging, and other processes, the battery cell is obtained, where the battery cell has a thickness T of 10 mm, a width W of 300 mm, and a height H of 150 mm, and the volumetric energy density of the battery cell is 800 Wh/L, meeting E/T being 80.

### Battery safety test:

When making a test battery cell, a 30 mm×30 mm×1 mm (length×width×thickness) heating plate is pasted on the surface of the electrode assembly. Positive and negative wires of the heating plate are led out from preset wire outlet holes of the end cover of the battery cell. The small hole position is structurally sealed, and the strength of the sealing position is not less than the strength required to open a pressure relief mechanism of the battery cell. After the test battery cell is manufactured, the battery cell is charged to a full charge state (100% SOC). The test environment temperature is the room temperature (25±5°C). The wire of the heating plate is connected to a DC power supply. The output power of the heating plate is set at 300±50 w. The heating is triggered until the battery cell undergoes thermal runaway. Thermal runaway behavior characteristics of the battery cell are explored.

When there is no obvious deformation for the shell and the end cover, it is marked as "++".

If one of the shell and the end cover is deformed, and there is no cracking at the weld between the shell and the end cover, it is marked as "+".

If both the shell and the end cover are deformed, and there is no cracking at the weld between the shell and the end cover, it is marked as "-".

If both the shell and the end cover is deformed, and there is cracking at the weld between the shell and the end cover, it is marked as "--".

The difference between the square battery cells of Embodiments 2 to 8 and Comparative Examples 1 and 2 and Embodiment 1 is the difference in the volumetric energy density E and the thickness T of the pool cells, which is specifically referred to in Table 1 below.

**Table 1 Results of Embodiments 1 to 8 and Comparative Examples 1 and 2**

| Number | E (Wh/L) | Tmm | Wmm | E/T(Wh/(L·mm)) | Pressure relief situation | Appearance of battery cell |
|---|---|---|---|---|---|---|
| Embodiment 1 | 800 | 10 | 300 | 80 | Relief pressure normally | ++ |
| Embodiment 2 | 800 | 20 | 300 | 40 | Relief pressure normally | ++ |
| Embodiment 3 | 800 | 40 | 300 | 20 | Relief pressure normally | ++ |
| Embodiment 4 | 800 | 60 | 300 | 13.33 | Relief pressure normally | + |
| Embodiment 5 | 800 | 100 | 300 | 8 | Relief pressure normally | + |
| Embodiment 6 | 600 | 20 | 300 | 30 | Relief pressure normally | ++ |
| Embodiment 7 | 1000 | 10 | 300 | 100 | Relief pressure normally | ++ |
| Embodiment 8 | 1300 | 20 | 300 | 65 | Relief pressure normally | ++ |
| Comparative Example 1 | 800 | 6 | 300 | 133.33 | Relief pressure abnormally | - |
| Comparative Example 2 | 800 | 160 | 300 | 5 | Relief pressure abnormally | - |

The difference between the square battery cells of Embodiments 9 to 11 and Comparative Examples 3 and 4 and Embodiment 2 is the difference in the thickness T and the width W of the battery cells, which is specifically referred to in Table 2 below.

**Table 2 Results of Embodiments 2 and 9 to 11 and Comparative Examples 3 and 4**

| Number | E (Wh/L) | T mm | W mm | E/T(Wh/(L· mm)) | Pressure relief situation | Appearance of battery cell |
|---|---|---|---|---|---|---|
| Embodim ent 2 | 800 | 20 | 300 | 40 | Relief pressure normally | ++ |
| Embodim ent 9 | 800 | 20 | 100 | 40 | Relief pressure normally | ++ |
| Embodim ent 10 | 800 | 30 | 600 | 26.67 | Relief pressure normally | ++ |
| Embodim ent 11 | 800 | 10 | 600 | 80 | Relief pressure normally | + |
| Comparati ve Example 3 | 800 | 10 | 800 | 80 | Relief pressure normally | - |
| Comparati ve Example 4 | 800 | 20 | 10 | 40 | Relief pressure abnormally | - |

In Embodiment 2, the wall thickness d of the shell is 1 mm, and the melting point C of the shell is 700°C.

The difference between the square battery cells of Embodiments 12 to 15 and Comparative Examples 5 and 6 and Embodiment 2 is the difference in the wall thickness d of the shell and the melting point C of the shell, which is specifically referred to in Table 3 below.

**Table 3 Results of Embodiments 2 and 12 to 15 and Comparative Examples 5 and 6**

| Number | E (Wh/L) | E/T(Wh/(L· mm)) | d | C | Pressure relief situation | Appearance of battery cell |
|---|---|---|---|---|---|---|
| | | | mm | °C | | |
| Embodim ent 2 | 800 | 40 | 1 | 700 | Relief pressure normally | ++ |
| Embodim ent 12 | 800 | 40 | 0.2 | 700 | Relief pressure normally | ++ |
| Embodim ent 13 | 800 | 40 | 1.5 | 700 | Relief pressure normally | ++ |
| Embodim ent 14 | 800 | 40 | 0.5 | 400 | Relief pressure normally | ++ |
| Embodim ent 15 | 800 | 40 | 0.5 | 1500 | Relief pressure normally | ++ |
| Comparati ve Example 5 | 800 | 40 | 1 | 300 | Relief pressure abnormally | -- |
| Comparati ve Example 6 | 800 | 20 | 0.15 | 1500 | Relief pressure abnormally | -- |

As can be known from the above results, Embodiments 1 to 15 all achieve a good effect. By appropriately adjusting the relationship between the volumetric energy density E and the minimum thickness T of the battery cell, in the case of thermal runaway and gas production occurring inside the battery cell to form a gas pressure, the battery cell is capable of relieving the pressure normally at the pressure relief mechanism of the battery cell, thereby reducing the structural deformation of the battery cell and reducing the risk of cracking at the weld of the shell and the end cover caused by the deformation of the battery cell, thereby further reducing the risk of battery explosion. Referring to Embodiments 2, 3, 6 and 8, the relationship between the volumetric energy density E and the minimum thickness T of the battery cell is further optimized, and the deformation of the battery cell is capable of being further reduced to improve the structural integrity of the battery cell while ensuring the normal pressure relief of the battery cell.

For the Comparative Examples 1 and 2, when the minimum thickness T of the battery cell is too small in dimension, it is not conducive to improving the volumetric energy density E of the battery cell. Moreover, there is not enough space to arrange a pressure relief mechanism, and the pressure relief area is too small, resulting in insufficient pressure relief capability and burning of the shell of the battery cell. When the minimum thickness T of the battery cell is too large in dimension, the shell and the end cover of the battery cell are easily deformed by a force, thereby reducing the strength of the weld of the shell and the end cover, so that the weld of the shell and the end cover cracks before the pressure relief mechanism, and it is unable to release pressure normally, thereby leading to extreme events such as thermal runaway explosion.

Embodiments 9 to 11 are capable of reasonably designing the dimension of the shell and capable of meeting the safety requirements of the battery cell. Moreover, the dimension of the battery cell in the first direction y, that is, the width W, is extended within an appropriate range, so that the large surface of the shell has a larger area, which is capable of dispersing the heat transferred to the shell when thermal runaway occurs, reducing the heat accumulation, and reducing the risk of the shell being punctured.

Embodiments 12 to 15 reasonably adjust the relationship between the melting point c of the shell and the wall thickness d of the shell, thereby ensuring that the shell has a certain mechanical strength. The deformation of the shell is effectively reduced, and the risk of cracking at the weld of the shell and the end cover due to deformation of the battery cell is reduced.

The present application has been described with reference to the preferred embodiments; however, various modifications may be made and components thereof may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A battery cell, wherein the volumetric energy density of the battery cell is E, the minimum thickness of the battery cell is T, and T and E meet: E≥600 Wh/L, and 6 Wh/(L·mm)≤E/T≤100 Wh/(L·mm).

2. The battery cell according to claim 1, wherein
the volumetric energy density E of the battery cell is 600 Wh/L<E≤1000 Wh/L.

3. The battery cell according to claim 1 or 2, wherein
T and E meet: 8 Wh/(L·mm)≤E/T≤80 Wh/(L·mm), optionally, 20 Wh/(L·mm)≤E/T≤80 Wh/(L·mm), and more optionally, 25 Wh/(L·mm)≤E/T≤40 Wh/(L·mm).

4. The battery cell according to any one of claims 1 to 3, wherein
the minimum thickness T of the battery cell is 10 mm<T≤100 mm, and optionally, 20 mm≤T≤60 mm.

5. The battery cell according to claim 1, wherein
the battery cell comprises a shell and an end cover, an end of the shell has an opening, and the end cover is configured to cover the opening.

6. The battery cell according to claim 5, wherein
the shell is welded to the end cover.

7. The battery cell according to claim 5 or 6, wherein
the melting point of the shell is c, the minimum wall thickness of the shell is d, and c and d meet: c/d≥400°C/mm, and optionally 400°C/mm≤c/d≤7500°C/mm.

8. The battery cell according to claim 5 or 6, wherein
the minimum wall thickness of the shell is d, and a ratio of T to d meets: 6≤T/d≤500, and optionally, 10≤T/d≤100.

9. The battery cell according to any one of claims 5 to 8, wherein
the minimum wall thickness d of the shell is 0.2 mm≤d≤1.5 mm.

10. The battery cell according to claim 9, wherein
the battery cell meets one or a plurality of the following (1) to (3):
(1) the minimum thickness T of the battery cell is 10 mm≤T≤40 mm, and the minimum wall thickness d of the shell is 0.2 mm≤d≤0.6 mm;
(2) the minimum thickness T of the battery cell is 40 mm≤T≤60 mm, and the minimum wall thickness d of the shell is 0.6 mm≤d≤1 mm; and
(3) the minimum thickness T of the battery cell is 60 mm<T≤100 mm, and the minimum wall thickness d of the shell is 1 mm≤d≤1.5 mm.

11. The battery cell according to claim 5 or 6, wherein
the minimum thickness D of the end cover is 1.5 mm≤ D≤4.0 mm.

12. The battery cell according to claim 1, wherein
the dimension of the battery cell in a first direction is W, and W and T meet: 1 mm/mm≤W/T≤60 mm/mm, optionally, 1.25 mm/mm≤W/T≤30 mm/mm, and more optionally, 1.5 mm/mm≤W/T≤20 mm/mm, wherein the dimension of the battery cell in the first direction is the largest.

13. The battery cell according to claim 12, wherein
the dimension W of the battery cell in the first direction is 100 mm≤W≤600 mm.

14. The battery cell according to claim 12, wherein
the dimension H of the battery cell in a second direction is H≤150 mm, and the second direction is perpendicular to the first direction.

15. The battery cell according to claim 1, wherein
the battery cell is a square battery cell.

16. A battery, comprising a plurality of the battery cells according to any one of claims 1 to 15.

17. An electrical apparatus, comprising a plurality of the battery cells according to any one of claims 1 to 15 or the battery according to claim 16, wherein the battery cell or the battery is configured to provide electric energy.
